# EUROPÄISCHE PATENTSCHRIFT

(11) **EP 2 862 757 B1**
(45) Veröffentlichungstag und Bekanntmachung des Hinweises auf die Patenterteilung: **18.10.2017**
(21) Anmeldenummer: 14002922.4
(22) Anmeldetag: 22.08.2014
(51) Int. Cl.: B60R 21/38

(54) **Verstellvorrichtung für eine Frontklappe und zugehöriges Kraftfahrzeug**
Adjusting device for a front flap and corresponding motor vehicle
Dispositif de réglage d'un volet avant et véhicule automobile associé

(30) Priorität: 21.10.2013 DE 102013017456
(43) Veröffentlichungstag der Anmeldung: 22.04.2015
(73) Patentinhaber: AUDI AG, 85045 Ingolstadt (DE)
(72) Erfinder: Kugler, Peter, 49186 Bad Iburg (DE); Dorfner, Wolfgang, DE - 85114 Buxheim (DE); Sternecker, Harald, DE - 92339 Beilngries (DE); Pfaller, Bernhard-Konrad, DE - 85095 Denkendorf (DE); Virag, Istvan, 85051 Ingolstadt (DE)
(74) Vertreter: Mader, Wilfried

(56) Entgegenhaltungen:
- DE-A1- 10 116 716
- DE-A1-102013 003 137

## Beschreibung

Die Erfindung betrifft eine Verstellvorrichtung für eine Frontklappe mit einem Aktuator zum Anheben der Hinterkante der Frontklappe, wobei der Aktuator einen ersten Linearantrieb aufweist, der eine im Wesentlichen vertikale Bewegung der Frontklappe ermöglicht und einen zweiten Linearantrieb, der eine im Wesentlichen horizontale Bewegung der Frontklappe ermöglicht.

Um die Gefahr von Verletzungen von Fußgängern bei einer Kollision mit einem Kraftfahrzeug zu verringern, sind Frontklappen entwickelt worden, die nach der Detektion eines Aufpralls aktiv angehoben werden können, damit ein Teil der Aufprallenergie durch Deformation der Frontklappe aufgenommen werden kann. Derartige aktive Klappen werden zumeist vertikal nach oben und zusätzlich nach hinten verschoben. Durch das Anheben der Frontklappe wird zwischen der Klappe und dem Motorraum ein Verformungsraum gebildet. Die erhöhte Stellung der Frontklappe wird auch als Fußgängerschutzstellung bezeichnet, gegebenenfalls kann auch eine sogenannte Typschadenstellung vorgesehen sein, bei der die Frontklappe ebenfalls in eine weiter erhöhte und noch weiter nach hinten versetzte Stellung gebracht werden kann. Ein mit einer derartigen Verstellvorrichtung ausgerüstetes Kraftfahrzeug weist eine Sensorik auf, die in der Lage ist, einen bevorstehenden oder aktuell stattfindenden Aufprall eines Fußgängers oder eines anderen Verkehrsteilnehmers zu detektieren. Nach der Detektion wird die Hinterkante der Frontklappe mittels des Aktuators in der erläuterten Weise angehoben.

In der DE 10 2007 055 914 A1 wird eine Vorrichtung zum Aufklappen einer Haube für ein Fahrzeug beschrieben. Die Vorrichtung umfasst einen Schwenkhebel, der mit einem Ende drehbar an der Fahrzeugkarosserie befestigt ist. Das andere Hebelende ist drehbar mit der Frontklappe verbunden, das Ausfahren erfolgt mittels eines Aktuators, der eine Hubkraft erzeugt, durch die die Klappe relativ zur Karosserie angehoben wird.

Aus der DE 10 2006 004 016 A1 ist ein Fahrzeug mit einer Frontklappe bekannt, die in Scharnieren aufgenommen ist. Eine Vorrichtung zum Anheben der Hinterkante der Frontklappe umfasst einen Aktuator, der in der Mitte eines Schwenkhebels angreift. Der Schwenkhebel ist mit einem Ende an der Frontklappe und mit seinem entgegengesetzten Ende mit einem zweiten Hebel gelenkig gekoppelt, der mit seinem anderen Ende in der Nähe des Aktuators karosseriefest angebracht ist.

Die DE 10 2011 118 856 A1 schlägt einen Motorhaubenaufsteller mit einem verschiebbaren Kolben vor, wobei der Kolben erst nach dem Auslösen des Fahrzeugsicherheitssystems die Motorhaube berührt und diese anhebt.

In der DE 20 2004 012 032 U1 wird ein Aktuator zum Anheben der Motorhaube vorgeschlagen, bei dem ein schwenkbares Bauteil durch eine Zugkraft verschwenkt werden kann, die durch einen Fluidantrieb erzeugt wird.

Aus der DE 101 16 716 A1 ist eine Verstellvorrichtung für eine Frontklappe nach dem Oberbegriff von Anspruch 1 bekannt, die zwei Linearantriebe aufweist, von denen ein Linearantrieb als Gasfeder mit zugehörigem Kolben ausgebildet ist. Die Verstellvorrichtung weist ferner einen Scharnierträger und zwischen diesem und der Fronthaube gelenkig angeordnete Scharnierglieder zum Anheben der Fronthaube im Anschlagbereich auf. Der Scharnierträger ist fahrzeugfest angeordnet und eines der Scharnierglieder ist als Energiespeicher mit einem Stellglied ausgebildet.

Der Erfindung liegt die Aufgabe zugrunde, eine Verstellvorrichtung für eine Frontklappe anzugeben, die erweiterte Feststellmöglichkeiten bietet.

Zur Lösung dieser Aufgabe ist bei einer Feststellvorrichtung der eingangs genannten Art erfindungsgemäß vorgesehen, dass die Verstellvorrichtung eine Steuerungseinrichtung aufweist oder damit verbunden ist, die den ersten und den zweiten Linearantrieb koordiniert steuert.

Die Erfindung beruht auf der Erkenntnis, dass die Frontklappe durch eine kombinierte Betätigung zweier Linearantriebe aus einer Ausgangsposition in eine Endposition verstellt werden kann. Da die Bewegung der Frontklappe, genauer gesagt die Bewegung der Hinterkante der Frontklappe, eine Kombination oder Überlagerung der Bewegungen der beiden Linearantriebe ist, kann auf eine komplizierte Kinematik, die teilweise bei herkömmlichen Feststellvorrichtungen erforderlich ist, verzichtet werden. Dementsprechend zeichnet sich die erfindungsgemäße Verstellvorrichtung durch einen vergleichsweise einfachen Aufbau und einen geringen Platzbedarf aus. Da die beiden Linearantriebe im Wesentlichen orthogonal zueinander angeordnet sind, kann praktisch jeder beliebige Punkt innerhalb einer festgelegten Fläche erreicht werden. Durch eine entsprechende Ansteuerung der Linearantriebe kann die erfindungsgemäße Verstellvorrichtung somit unterschiedliche Öffnungsbewegungen durchführen.

Gemäß einer ersten Variante der erfindungsgemäßen Verstellvorrichtung kann es vorgesehen sein, dass der erste Linearantrieb einen karosseriefesten Befestigungspunkt und einen zweiten, an einem feststellbaren Abschnitt des zweiten Linearantriebs angeordneten Befestigungspunkt aufweist. Bei dieser Variante sind die beiden Linearantriebe derart miteinander gekoppelt, dass eine Betätigung des ersten Linearantriebs, das heißt eine Bewegung des beweglichen Abschnitts, der z. B. als Kolben, Zylinder, Zahnstange und dergleichen ausgebildet sein kann, gleichzeitig den zweiten Linearantrieb bewegt. Bei dieser Ausgestaltung ist somit eine Kopplung der beiden Linearantriebe vorhanden, da der zweite Linearantrieb bei einer Betätigung des ersten Linearantriebs linear verschoben wird. Es spielt dabei keine Rolle, ob der erste Linearantrieb die horizontale Bewegung oder die vertikale Bewegung durchführt, da beide Varianten beziehungsweise Alternativen möglich sind.

Bei der erfindungsgemäßen Verstellvorrichtung wird es bevorzugt, dass der verstellbare Abschnitt des zweiten Linearantriebs entlang einer frontklappenfesten Führung verschiebbar ist.

Die frontklappenfeste Führung ist derart angeordnet, dass bei einer Betätigung des zugehörigen Linearantriebs eine Verschiebung der Frontklappe in horizontaler Richtung ausgelöst wird. Auf diese Weise kann die Frontklappe aus einer Normalstellung, in der die Frontklappe "eingefahren" ist, in eine erhöhte und zum Heck des Fahrzeugs verschobene Stellung gebracht werden. Es spielt wiederum keine Rolle, ob der erste Linearantrieb oder der zweite Linearantrieb entlang der frontklappenfesten Führung verschiebbar ist.

Eine besonders zuverlässige Funktion der erfindungsgemäßen Verstellvorrichtung ergibt sich, wenn der erste und der zweite Linearantrieb gelenkig miteinander verbunden sind. Durch das zwischen den beiden Linearantrieben gebildete Gelenk wird eine Drehung der Frontklappe beim Anheben ermöglicht.

Gemäß einer zweiten Ausgestaltung der Erfindung kann der erste Linearantrieb einen karosseriefesten Befestigungspunkt und einen ersten frontklappenfesten Befestigungspunkt und der zweite Linearantrieb einen zweiten karosseriefesten Befestigungspunkt und einen zweiten frontklappenfesten Befestigungspunkt aufweisen. Die beiden karosseriefesten Befestigungspunkte und die beiden frontklappenfesten Befestigungspunkte sind dabei jeweils voneinander beabstandet angeordnet. Dementsprechend weisen die beiden Linearantriebe jeweils separate beziehungsweise beabstandet voneinander angeordnete Befestigungspunkte auf. Dementsprechend greifen die beiden Linearantriebe beziehungsweise deren verstellbare Abschnitte an verschiedenen Punkten der Frontklappe an. Ein Linearantrieb ist dabei für eine im Wesentlichen horizontale Bewegung der Frontklappe verantwortlich, der andere Linearantrieb für eine im Wesentlichen vertikale Bewegung der Frontklappe.

Um eine Baugruppe zu bilden, kann es bei der erfindungsgemäßen Verstellvorrichtung vorgesehen sein, dass die beiden frontklappenfesten Befestigungspunkte an gegenüberliegenden Enden eines frontklappenfesten Schenkels angeordnet sind. Bei dieser Ausführung ist somit der frontklappenfeste Schenkel vorgesehen, der vorzugsweise in Längsrichtung des Fahrzeugs angebracht ist und an dessen Enden jeweils ein Linearantrieb angreift. Die beiden Angriffspunkte der Linearantriebe sind somit durch den Schenkel voneinander beabstandet, so dass eine bestimmte, festgelegte Kinematik erhalten wird. Die gesamte Verstellvorrichtung mit den beiden Linearantrieben und dem frontklappenfesten Schenkel bildet eine vormontierbare Baugruppe. Für eine ordnungsgemäße Funktion der erfindungsgemäßen Verstellvorrichtung ist es zweckmäßig, dass die Linearantriebe an den karosseriefesten und den frontklappenfesten Befestigungspunkten gelenkig befestigt sind.

Bei allen Varianten der erfindungsgemäßen Verstellvorrichtung ist es vorgesehen, dass sie eine Steuerungseinrichtung aufweist oder damit verbindbar oder verbunden ist, die zum koordinierten Steuern des ersten und des zweiten Linearantriebs ausgebildet ist. Die Steuerungseinrichtung kann mit einem oder mehreren Sicherheitssystemen des Kraftfahrzeugs zusammenwirken, beispielsweise mit einem System zum Detektieren eines Fußgängeraufpralls. Wenn eine vorhandene oder bevorstehende Gefahrensituation, beispielsweise ein momentan stattfindender Aufprall eines Fußgängers, detektiert worden ist, steuert die Steuerungseinrichtung die beiden Linearantriebe der erfindungsgemäßen Verstellvorrichtung so, dass die Frontklappe nach oben und zum Fahrzeugheck hin verschoben wird, damit zwischen der Frontklappe und dem Motorraum ein Verformungsraum gebildet wird. Ein Kraftfahrzeug weist vorzugsweise zwei erfindungsgemäße Verstellvorrichtungen auf, die identisch beziehungsweise symmetrisch zur Längsachse eines Kraftfahrzeugs ausgebildet sein können. Die Frontklappe kann auf diese Weise symmetrisch beziehungsweise synchron angehoben werden, vorzugsweise durch die links und rechts gegenüberliegend angeordneten Verstellvorrichtungen.

Bei der erfindungsgemäßen Verstellvorrichtung ist die Steuerungseinrichtung vorzugsweise dazu ausgebildet, die Linearantriebe so anzusteuern, dass die Hinterkante der Frontklappe in eine erhöhte und nach hinten verschobene Fußgängerschutzstellung oder in eine weiter erhöhte und weiter nach hinten verschobene Typklassenstellung bewegbar ist. Darüber hinaus können weitere Stellungen oder Positionen vorgesehen sein, beispielsweise um den Einbau der Motorhaube zu vereinfachen oder einen besseren Zugang bei Wartungs- oder Reparaturarbeiten zu ermöglichen.

Bei der erfindungsgemäßen Verstellvorrichtung können die Linearantriebe als Elektromotoren ausgebildet sein. Ein Linearantrieb kann eine Spindel oder eine Zahnstange oder einen Kolben aufweisen, wodurch eine Linearbewegung ermöglicht wird.

Daneben betrifft die Erfindung ein Kraftfahrzeug. Das erfindungsgemäße Kraftfahrzeug zeichnet sich dadurch aus, dass es eine oder vorzugsweise zwei an gegenüberliegenden Seiten der Frontklappe angebrachte Verstellvorrichtungen der beschriebenen Art aufweist.

Die Erfindung wird nachfolgend anhand von zwei Ausführungsbeispielen unter Bezugnahme auf die Zeichnungen erläutert. Die Zeichnungen sind schematische Darstellungen und zeigen:
- Fig. 1: eine erfindungsgemäße Verstellvorrichtung in einer Ausgangs-stellung;
- Fig. 2: die Verstellvorrichtung von Fig. 1 in einer anderen Position;
- Fig. 3: die Verstellvorrichtung von Fig. 1 in einer weiteren Position;
- Fig. 4: ein zweites Ausführungsbeispiel einer erfindungsgemäßen Ver-stellvorrichtung in einer Ausgangsstellung;
- Fig. 5: die Verstellvorrichtung von Fig. 4 in einer anderen Position; und
- Fig. 6: die Verstellvorrichtung von Fig. 4 in einer weiteren Position.

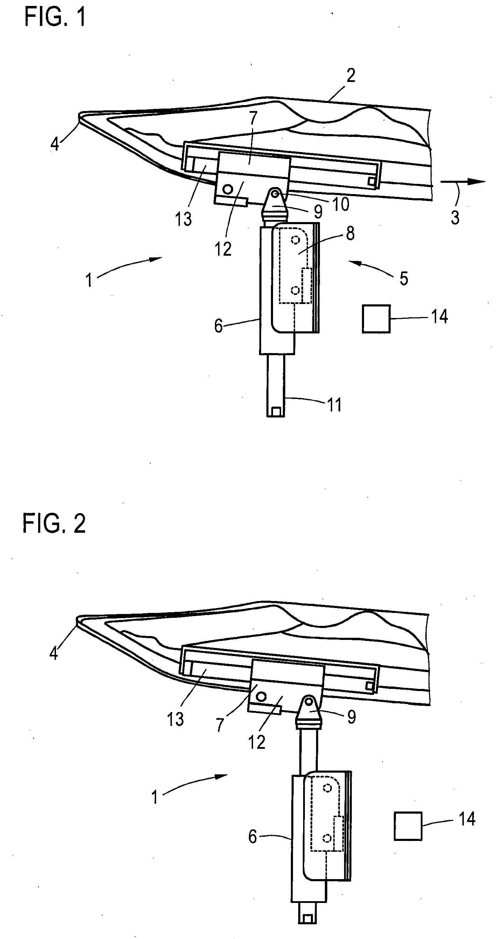

Fig. 1 ist eine Seitenansicht und zeigt eine Verstellvorrichtung 1, die mit einer Frontklappe 2 eines Kraftfahrzeugs verbunden ist. Ein Pfeil 3 zeigt in Richtung der Front des Fahrzeugs, dementsprechend gibt Bezugszeichen 4 die Hinterkante der Frontklappe 2 an.

Die Verstellvorrichtung 1 umfasst einen Aktuator 5 zum Anheben der Hinterkante 4 der Frontklappe 2.

Der Aktuator 5 umfasst einen ersten Linearantrieb 6, der eine im wesentlichen vertikale Bewegung der Frontklappe 2 ermöglicht und einen zweiten Linearantrieb 7, der eine im Wesentlichen horizontale Bewegung der Frontklappe 2 ermöglicht. Der erste Linearantrieb 6 umfasst einen karosseriefesten Befestigungspunkt 8 und einen zweiten, an einem verstellbaren Abschnitt 9 des zweiten Linearantriebs 7 angeordneten Befestigungspunkt 10. Der karosseriefeste Befestigungspunkt 8 kann direkt mit der Karosserie verbunden sein, beispielsweise durch eine Schraubverbindung oder eine Schweißverbindung. Es sind allerdings auch Ausführungen denkbar, bei denen der karosseriefeste Befestigungspunkt 8 mit einem anderen Bauteil verbunden ist, das wiederum mit der Karosserie verbunden ist. Der erste Linearantrieb 6 ist in dem dargestellten Ausführungsbeispiel als Spindeltrieb ausgebildet und weist einen nicht näher dargestellten Elektromotor auf, durch den eine Spindel 11, an der sich der verstellbare Abschnitt 9 befindet, vertikal bewegt werden kann.

Der zweite Linearantrieb 7 weist ebenfalls einen Elektromotor auf, durch den ein verstellbarer Abschnitt 12 entlang einer frontklappenfesten Führung 13 verschiebbar ist. In Abhängigkeit von der Einbausituation des zweiten Linearantriebs 7 kann dieser entweder eine horizontale Bewegung der Frontklappe 2 relativ zur Karosserie oder eine geringfügig geneigte Bewegung ermöglichen, wie in Fig. 1 gezeigt ist.

An dem zweiten Befestigungspunkt 10, der sich am Ende des verstellbaren Abschnitts 9 des ersten Linearantriebs 6 befindet, sind die beiden Linearantriebe 6, 7 miteinander gekoppelt. Bei einer vertikalen Verschiebung des ersten Linearantriebs 6 wird der verstellbare Abschnitt 9 aus der in Fig. 1 gezeigten Ausgangslage vertikal nach oben verschoben. Wegen der Kopplung der beiden Linearantriebe 6, 7 wird dabei der gesamte zweite Linearantrieb 7 sowie die mit diesem verbundene Frontklappe 2 vertikal nach oben bewegt. Bei einer Betätigung des zweiten Linearantriebs 7 entlang der frontklappenfesten Führung 13 wird die Frontklappe 2 relativ zur Karosserie des Kraftfahrzeugs verschoben. Aus der in Fig. 1 gezeigten Ausgangsposition kann die Frontklappe 2 im Wesentlichen nach hinten, das heißt in Richtung zur Hinterkante 4 verschoben werden.

Fig. 2 zeigt die Verstellvorrichtung 1 in einer gegenüber der Ausgangsposition von Fig. 1 verschobenen Position. In Fig. 2 erkennt man, dass der verstellbare Abschnitt 9 des ersten Linearantriebs 6 durch eine Betätigung des zugehörigen Elektromotors vertikal nach oben verschoben worden ist. Zusätzlich wurde die Frontklappe 2 durch eine Betätigung des zweiten Linearantriebs 7 aus der in Fig. 1 gezeigten Ausgangsposition in Richtung der Hinterkante 4 verschoben. In Fig. 2 ist dargestellt, dass sich der verstellbare Abschnitt 12 des zweiten Linearantriebs 7 näherungsweise in der Mitte der frontklappenfesten Führung 13 befindet. Die gelenkige Verbindung der beiden Linearantriebe 6, 7 ermöglicht die mit der Verstellung einhergehende Drehung der Frontklappe 2 bezüglich ihres Drehpunkts. Die in Fig. 2 gezeigte Stellung ist eine Fußgängerschutzstellung, in der die Frontklappe 2 ausgehend von der in Fig. 1 gezeigten Ausgangsposition vertikal nach oben und zum Heck des Kraftfahrzeugs verschoben ist.

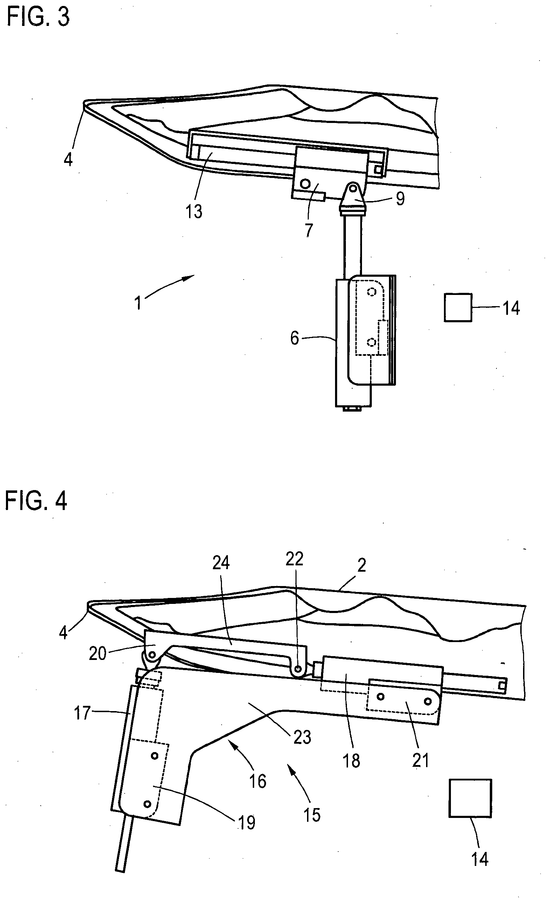

Fig. 3 zeigt die Verstellvorrichtung 1 in einer im Vergleich zu der Position von Fig. 2 noch weiter vertikal nach oben und noch weiter nach hinten verschobenen Position. Der verstellbare Abschnitt 9 des ersten Linearantriebs 6 hat dabei nahezu seine höchste vertikale Position erreicht. Auch der verstellbare Abschnitt 12 des zweiten Linearantriebs 7 befindet sich nahezu an einem Ende der frontklappenfesten Führung 13.

In den Figuren 1 - 3 ist schematisch eine Steuerungseinrichtung 14 gezeigt, die über nicht näher gezeigte elektrische Leitungen mit den beiden Linearantrieben 6, 7 verbunden ist. Darüber hinaus ist die Steuerungseinrichtung 14 mit einem System zur Detektion eines Aufpralls verbunden. Bei einem erkannten Aufprall steuert die Steuerungseinrichtung 14 die beiden Linearantriebe 6, 7 koordiniert, insbesondere in eine der in Fig. 2 und Fig. 3 gezeigten Positionen. Die in Fig. 3 gezeigte Position wird als Typschadenstellung bezeichnet.

Die Figuren 4 - 6 zeigen ein zweites Ausführungsbeispiel einer Verstellvorrichtung 15, die einen Aktuator 16 zum Anheben der Hinterkante 4 der Frontklappe 2 aufweist. Der Aktuator 16 umfasst einen ersten Linearantrieb 17, der eine im Wesentlichen vertikale Bewegung der Frontklappe 2 ermöglicht und einen zweiten Linearantrieb 18, der eine im Wesentlichen horizontale Bewegung der Frontklappe 2 ermöglicht.

An dieser Stelle wird auf eine detaillierte Beschreibung derjenigen Bauteile verzichtet, die denjenigen des ersten Ausführungsbeispiels entsprechen.

Der erste Linearantrieb 17 weist einen ersten karosseriefesten Befestigungspunkt 19 und einen ersten frontklappenfesten Befestigungspunkt 20 auf. Der zweite Linearantrieb 18 weist einen zweiten karosseriefesten Befestigungspunkt 21 und einen zweiten frontklappenfesten Befestigungspunkt 22 auf. In Fig. 4 ist dargestellt, dass die beiden karosseriefesten Befestigungspunkte 19, 21 an einem Blech 23 angeordnet sind. Das Blech 23 ist wiederum in nicht näher dargestellter Weise mit der Karosserie des Kraftfahrzeugs verbunden. Es sind allerdings auch andere Ausführungen denkbar, bei denen die karosseriefesten Befestigungspunkte 19, 21 direkt mit der Karosserie verbunden, insbesondere verschraubt, sind.

In dem in Fig. 4 gezeigten Ausführungsbeispiel sind die frontklappenfesten Befestigungspunkte 20, 22 voneinander beabstandet. Die beiden Befestigungspunkte 20, 22 sind an gegenüberliegenden Enden eines frontklappenfesten Schenkels 24 angeordnet. Auf diese Weise bildet die Verstellvorrichtung 15 eine vormontierbare Baugruppe.

Fig. 4 zeigt lediglich eine Verstellvorrichtung 15, ein Kraftfahrzeug weist jedoch zwei links und rechts an der Frontklappe 2 angebrachte Verstellvorrichtungen 15 auf.

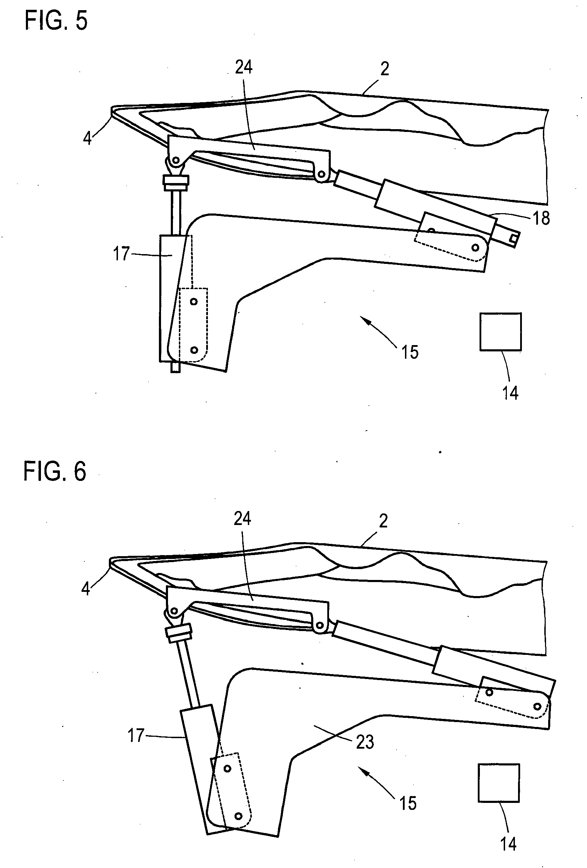

Fig. 5 zeigt die Verstellvorrichtung 15, nachdem beide Linearantriebe 17, 18 betätigt wurden. Ausgehend von der in Fig. 4 gezeigten Ausgangsstellung wurde der verstellbare Abschnitt des ersten Linearantriebs 17 vertikal nach oben verschoben, wodurch die Frontklappe 2 im Bereich ihrer Hinterkante 4 vertikal nach oben verschoben wurde. Von der Steuerungseinrichtung 14 wurde darüber hinaus auch der zweite Linearantrieb 18 betätigt, wodurch dessen verstellbarer Abschnitt in Richtung der Hinterkante 4 verschoben wurde. Die Überlagerung dieser Bewegungen führt dazu, dass die Frontklappe 2 im Bereich ihrer Hinterkante 4 sowohl vertikal nach oben als auch nach hinten, das heißt in Richtung zum Fahrzeugheck, verschoben wurde.

Die Steuerungseinrichtung 14 steuert die beiden Linearantriebe 17, 18 dabei koordiniert, so dass keine Zwangskräfte auftreten können. Durch die gelenkige Lagerung der beiden Linearantriebe 17, 18 wird die Bewegung der Frontklappe 2 ermöglicht. Fig. 5 zeigt die Frontklappe 2 in der Fußgängerschutzstellung.

In Fig. 6 ist die Typschadenstellung gezeigt, in der der verstellbare Abschnitt des ersten Linearantriebs 17 maximal ausgefahren ist. In Fig. 6 erkennt man, dass der erste Linearantrieb 17 gegenüber dem Blech 23 gedreht worden ist, was durch die gelenkige Lagerung ermöglicht wird. Der zweite Linearantrieb 18 ist ebenfalls maximal ausgelenkt, so dass die Frontklappe 2 maximal nach hinten verschoben worden ist.

## Patentansprüche

1. Verstellvorrichtung (1, 15) für eine Frontklappe (2) mit einem Aktuator (5, 16) zum Anheben der Hinterkante (4) der Frontklappe, wobei der Aktuator (5, 16) einen ersten Linearantrieb (6, 17) aufweist, der eine im Wesentlichen vertikale Bewegung der Frontklappe (2) ermöglicht und einen zweiten Linearantrieb (7, 18), der eine im Wesentlichen horizontale Bewegung der Frontklappe (2) ermöglicht,
**dadurch gekennzeichnet,**
**dass** die Verstellvorrichtung eine Steuerungseinrichtung (14) aufweist oder damit verbunden ist, die den ersten und den zweiten Linearantrieb (6, 7, 17, 18) koordiniert steuert.

2. Verstellvorrichtung nach Anspruch 1,
**dadurch gekennzeichnet,**
**dass** der erste Linearantrieb (6) einen karosseriefesten Befestigungspunkt (8) und einen zweiten, an einem verstellbaren Abschnitt (9) des zweiten Linearantriebs (7) angeordneten Befestigungspunkt (10) aufweist.

3. Verstellvorrichtung nach Anspruch 2,
**dadurch gekennzeichnet,**
**dass** der verstellbare Abschnitt (9) des zweiten Linearantriebs (7) entlang einer frontklappenfesten Führung (13) verschiebbar ist.

4. Verstellvorrichtung nach Anspruch 2 oder 3,
**dadurch gekennzeichnet,**
**dass** der erste und der zweite Linearantrieb (6, 7) gelenkig miteinander verbunden sind.

5. Verstellvorrichtung nach Anspruch 1,
**dadurch gekennzeichnet,**
**dass** der erste Linearantrieb (17) einen ersten karosseriefesten Befestigungspunkt (19) und einen ersten frontklappenfesten Befestigungspunkt (20) und der zweite Linearantrieb (18) einen zweiten karosseriefesten Befestigungspunkt (21) und einen zweiten frontklappenfesten Befestigungspunkt (22) aufweist.

6. Verstellvorrichtung nach Anspruch 5,
**dadurch gekennzeichnet,**
**dass** die beiden frontklappenfesten Befestigungspunkte (20, 22) an gegenüberliegenden Enden eines frontklappenfesten Schenkels (24) angeordnet sind.

7. Verstellvorrichtung nach Anspruch 5 oder 6,
**dadurch gekennzeichnet,**
**dass** die Linearantriebe (17, 18) an den karosseriefesten und den frontklappenfesten Befestigungspunkten (19, 20, 21, 22) gelenkig befestigt sind.

8. Verstellvorrichtung nach einem der vorangehenden Ansprüche,
**dadurch gekennzeichnet,**
**dass** die Steuerungseinrichtung (14) dazu ausgebildet ist, die Linearantriebe (6, 7, 17, 18) so anzusteuern, dass die Hinterkante (4) der Frontklappe (2) in eine erhöhte und nach hinten verschobene Fußgängerschutzstellung oder in eine weiter erhöhte und weiter nach hinten verschobene Typklassenstellung bewegbar ist.

9. Verstellvorrichtung nach einem der vorangehenden Ansprüche,
**dadurch gekennzeichnet,**
**dass** die Linearantriebe (6, 7, 17, 18) als Elektromotoren ausgebildet sind.

10. Kraftfahrzeug,
**dadurch gekennzeichnet,**
**dass** es eine Verstellvorrichtung (1, 15) nach einem der Ansprüche 1 bis 9 aufweist.

## Claims

1. Adjustment device (1, 15) for a bonnet (2) having an actuator (5, 16) for raising the rear edge (4) of the bonnet, wherein the actuator (5, 16) has a first linear drive (6, 17) which enables a substantially vertical movement of the bonnet (2) and a second linear drive (7, 18) which enables a substantially horizontal movement of the bonnet (2),
**characterised in that**
the adjustment device has or is connected to a control device (14) which controls the first and the second linear drives (6, 7,17,18) in a coordinated manner.

2. Adjustment device according to claim 1,
**characterised in that**
the first linear drive (6) has a securing location (8) which is fixed to the body and a second securing location (10) which is arranged on an adjustable portion (9) of the second linear drive (7).

3. Adjustment device according to claim 2,
**characterised in that**
the adjustable portion (9) of the second linear drive (7) can be displaced along a guide (13) which is secured to a bonnet.

4. Adjustment device according to claim 2 or 3,
**characterised in that**
the first and the second linear drives (6, 7) are connected to each other in an articulated manner.

5. Adjustment device according to claim 1,
**characterised in that**
the first linear drive (17) has a first securing location (19) which is secured to the body and a first securing location (20) which is secured to the bonnet and the second linear drive (18) has a second securing location (21) which is secured to the body and a second securing location (22) which is secured to the bonnet.

6. Adjustment device according to claim 5,
**characterised in that**
the two securing locations (20, 22) which are secured to the bonnet are arranged at opposing ends of a member (24) which is secured to a bonnet.

7. Adjustment device according to claim 5 or 6,
**characterised in that**
the linear drives (17, 18) are secured in an articulated manner to the securing locations (19, 20, 21, 22) which are secured to the body and the bonnet.

8. Adjustment device according to any one of the preceding claims,
**characterised in that**
the control device (14) is constructed to control the linear drives (6, 7, 17, 18) in such a manner that the rear edge (4) of the bonnet (2) can be moved into a raised pedestrian protection position displaced towards the rear or into a type class position which is further raised and further displaced towards the rear.

9. Adjustment device according to any one of the preceding claims,
**characterised in that**
the linear drives (6, 7,17,18) are constructed as electric motors.

10. Motor vehicle,
**characterised in that**
it has an adjustment device (1, 15) according to any one of claims 1 to 9.

## Revendications

1. Dispositif de réglage (1, 15) pour un capot (2) avec un actionneur (5, 16) afin de soulever le bord arrière (4) du capot,
dans lequel l'actionneur (5, 16) comporte un premier dispositif d'entraînement linéaire (6, 17) qui permet un déplacement globalement vertical du capot (2) et un second dispositif d'entraînement linéaire (7, 18) qui permet un déplacement globalement horizontal du capot (2),
**caractérisé en ce que** le dispositif de réglage comporte un dispositif de commande (14) ou est relié à celui-ci, lequel dispositif de commande sert à commander de manière coordonnée le premier et le second dispositif d'entraînement linéaire (6, 7, 17,18).

2. Dispositif de réglage selon la revendication 1, **caractérisé en ce que** le premier dispositif d'entraînement linéaire (6) comporte un point de fixation (8) solidaire de la carrosserie et un second point de fixation (10) agencé au niveau d'un tronçon réglable (9) du second dispositif d'entraînement linéaire (7).

3. Dispositif de réglage selon la revendication 2, **caractérisé en ce que** le tronçon réglable (9) du second dispositif d'entraînement linéaire (7) est déplaçable en translation le long d'un guide (13) solidaire du capot.

4. Dispositif de réglage selon la revendication 2 ou 3, **caractérisé en ce que** le premier et le second dispositif d'entraînement linéaire (6, 7) sont reliés entre eux de manière articulée.

5. Dispositif de réglage selon la revendication 1, **caractérisé en ce que** le premier dispositif d'entraînement linéaire (17) comporte un premier point de fixation (19) solidaire de la carrosserie et un premier point de fixation (20) solidaire du capot et le second dispositif d'entraînement linéaire (18) comporte un second point de fixation (21) solidaire de la carrosserie et un second point de fixation (22) solidaire du capot.

6. Dispositif de réglage selon la revendication 5, **caractérisé en ce que** les deux points de fixation (20, 22) solidaires du capot sont agencés au niveau d'extrémités opposées d'un bras (24) solidaire du capot.

7. Dispositif de réglage selon la revendication 5 ou 6, **caractérisé en ce que** les dispositifs d'entraînement linéaire (17, 18) sont fixés de manière articulée aux points de fixation (19, 20, 21, 22) solidaires de la carrosserie et solidaires du capot.

8. Dispositif de réglage selon l'une des revendications précédentes, **caractérisé en ce que** le dispositif de commande (14) est conçu pour commander les dispositifs d'entraînement linéaire (6, 7, 17, 18) de telle sorte que le bord arrière (4) du capot (2) peut être déplacé dans une position de protection de piéton qui est plus élevée et déplacée vers l'arrière ou dans une position de classe de type qui est encore plus élevée et encore plus déplacée vers l'arrière.

9. Dispositif de réglage selon l'une des revendications précédentes, **caractérisé en ce que** les dispositifs d'entraînement linéaire (6, 7, 17, 18) sont conçus comme des moteurs électriques.

10. Véhicule automobile, **caractérisé en ce qu'**il comporte un dispositif de réglage (1, 15) selon l'une des revendications 1 à 9.
